# EUROPEAN PATENT SPECIFICATION

(11) **EP 4 274 085 B1**
(45) Date of publication and mention of the grant of the patent: **25.11.2026**
(21) Application number: 23171888.3
(22) Date of filing: 05.05.2023
(51) Int. Cl.: H02P 9/10, H02P 9/30, H02P 9/44, H02P 101/30

(54) **ELECTRIC POWER GENERATION SYSTEM (EPGS) CONTROLLER EXCITATION SYSTEM ARCHITECTURE FOR VARIABLE FREQUENCY GENERATORS AND METHOD THEREOF**
ERREGUNGSSYSTEMARCHITEKTUR FÜR EIN STEUERGERÄT EINES STROMERZEUGUNGSSYSTEMS FÜR GENERATOREN VARIABLER FREQUENZ UND VERFAHREN DAZU
ARCHITECTURE DE SYSTÈME D'EXCITATION DE CONTRÔLEUR DE SYSTÈME DE GÉNÉRATION D'ÉNERGIE ÉLECTRIQUE POUR GÉNÉRATEURS À FRÉQUENCE VARIABLE ET PROCÉDÉ ASSOCIÉ

(30) Priority: 06.05.2022 US 202217738331
(43) Date of publication of application: 08.11.2023
(73) Proprietor: Hamilton Sundstrand Corporation, Charlotte, NC 28217-4578 (US)
(72) Inventor: PATEL, Dhaval S., Schaumburg, IL (US); VANDERGRIFT, Adrian E., Rockton, IL (US); PATEL, Sunil S., Rockford, IL (US)
(74) Representative: Dehns

(56) References cited:
- JP-B2- 6 833 743
- US-A1- 2007 257 558
- US-A1- 2019 308 511
- US-A1- 2021 288 567

## Description

### BACKGROUND

### 1. Field

The present disclosure relates to controller excitation systems, and more particularly to controller excitation systems for variable frequency generators (VFG's).

### 2. Description of Related Art

Electric Power Generation System (EPGS) controller excitation system architecture can be utilized on variable frequency systems. The typical system utilizes three stages (a permanent magnet generator (PMG), Excitation, and Main Machine) in order to control the output voltage of the system under any load condition.

One problem with this system is for a VFG application the excitation current requirements and the power supply requirements create a large design space. For VFG applications the excitation requirements drive high input power and voltage requirements for the exciter drive, whereas the power supply input power and voltage requirements are much lower. For VFG applications, the exciter current requirements span a large range. The minimum speed operation drives currents for the overloads to 2X and 3X times the values that are seen on constant speed applications. The excitation requirement typically forces the sizing of the PMG. Because PMGs have fixed fields (i.e. magnets on the rotor) the field strength during operation is only dictated by frequency (as speed increases both voltage and power capacity increases). The high voltage at high speed drives the GCU power supply design complexity and component sizing because the power supply is converting the high voltage to 28 VDC at a low power level, for example.

A secondary problem with the system is decoupling the exciter drive from the power supply. A common DC source for the HVPS (high voltage power supply) and the exciter drive imposes constraints on the HVPS input voltage range during certain generator fault conditions. To address these constraints additional transient suppressors are often required at the HVDC input.

The conventional techniques have been considered satisfactory for their intended purpose. However, there is an ever present need for improved systems and methods for controller excitation system architectures for variable frequency generators. This disclosure provides a solution for this need. JP 6833743 B2 describes a brushless synchronization generator. US 2019/308511 A1 describes an electric drive system. US 2021/288567 A1 describes a controller for a generator. US 2007/0257558 A1 describes an electric power supply for an aircraft.

### SUMMARY

A system is described herein and defined in claim 1.

The first and second rectifiers can be configured such that the first rectifier receives a lower input AC voltage than the second rectifier. The first and second rectifiers can also be configured such that the first rectifier outputs a lower DC voltage than the second rectifier.

The LVPS can be configured to convert DC power received from the first rectifier to a lower voltage for output. The first rectifier and the LVPS can be directly connected together with or without an intervening High Voltage Power Supply stepping down voltage between the first rectifier and the LVPS.

The controller can be configured to output a control signal for excitation of a variable frequency generator (VFG).The system can include a variable frequency generator (VFG). The VFG can include a first permanent magnet generator (PMG) operatively connected to provide AC power to the first rectifier. A second PMG can be operatively connected to provide AC power to the second rectifier.

The VFG can include an exciter operatively connected to receive DC exciter current from the GCU. The exciter can be configured to output AC power.

The VFG can include a rotating rectifier operatively connected to receive the AC power from the exciter. The rotating rectifier can be configured to output DC power.

The VFG can include a main machine operatively connected to receive the DC power from the rotating rectifier. The main machine can be configured to output AC power to a generator load.

A method is described herein and defined in claim 10.

The method can include powering an exciter drive of the GCU with DC power from the second rectifier. It is contemplated that the method can include powering a controller of the GCU with DC power derived from the first rectifier. The method can include using the exciter to drive a main machine of the VFG to power a generator load.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:

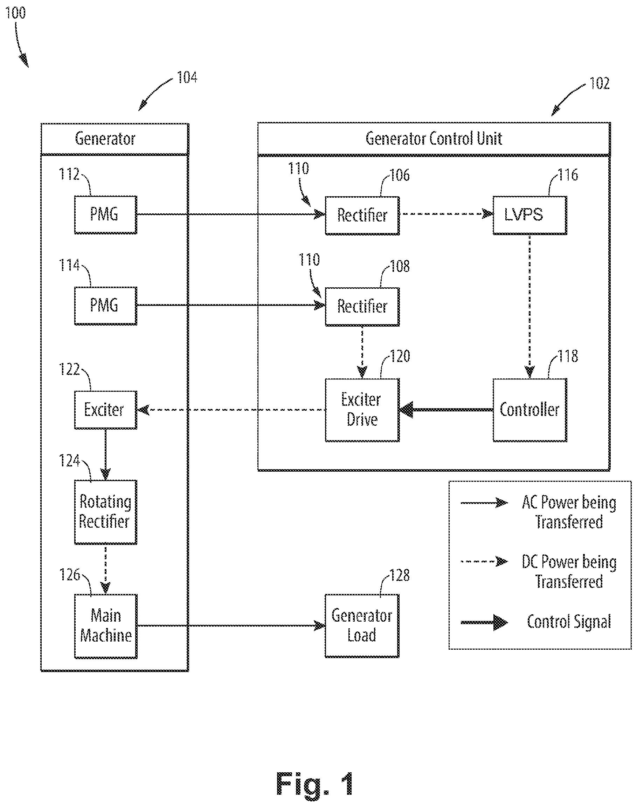

Fig. 1 is a schematic view of an embodiment of a system constructed in accordance with the present disclosure, showing the interconnections of the generator control unit (GCU) and the variable frequency generator (VFG).

### DETAILED DESCRIPTION OF THE PREFERRED EMBODIMENTS

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. The systems and methods described herein can be used to decouple power for the controller of a generator control unit (GCU) from power for the exciter drive, while also resolving the discrepancy between excitation requirements and power supply requirements for the controller.

The system 100 includes a generator control unit (GCU) 102 operatively connected to a variable frequency generator (VFG) 104. The GCU 102 includes a first rectifier 106 and a second rectifier 108. The first rectifier 106 and the second rectifier 108 have separate inputs 110 to receive AC power from separate respective permanent magnet generators (PMGs) 112, 114 of the VFG 104.

The first and second rectifiers 106, 108 are configured such that the first rectifier 106 receives a lower input AC voltage than the second rectifier 108. The first and second rectifiers 106, 108 are also configured such that the first rectifier 106 outputs a lower DC voltage than the second rectifier 108. The rectifiers 106, 108 can each be a six pulse rectifier with a snubber circuit to condition the DC waveform, or any other suitable type of rectifier.

The GCU 102 includes a low voltage power supply (LVPS) 116 operatively connected to receive DC power output from the first rectifier 106. The LVPS 116 is configured to convert DC power received from the first rectifier to a lower voltage for output. The first rectifier 106 and the LVPS 116 can be connected together with or without an intervening High Voltage Power Supply stepping down voltage between the first rectifier 106 and the LVPS 116.

The GCU 102 includes a controller 118 operatively connected to receive DC power from the LVP 116. The controller 118 is configured to output a control signal for excitation of the VFG 104. The controller 118 can be a DSP (digital signal processor) or FPGA (field programmable gate array) based controller which controls the generator exciter current. The controller 118 receives voltage and current inputs from the system 100 and sets the excitation requirements to meet the load demand on the VFG 104. The controller 118 does this by setting the duty cycle of the exciter drive 120 to achieve an excitation current.

The GCU 102 includes an exciter drive 120 operatively connected to receive the control signal from the controller 118. The exciter drive 120 is configured to output DC exciter current to the VFG 104. The exciter drive 120 is operatively connected to receive its DC power input from the second rectifier 108. The exciter drive 120 can use a two switch forward configuration to control the exciter current. The duty cycle for the switches in the two switch forward configuration is set by the controller 118.

The VFG 104 includes a first PMG 112 operatively connected to provide AC power to the first rectifier 106. The second PMG 114 of the VFG 104 is operatively connected to provide AC power to the second rectifier 108. Each PMG 112, 114 can be a permanent magnet generator, having a three phase armature on the stator of the VFG 104 and a rotating field which has a set of magnets creating the field. Each respective PMG output is three phase AC power. In some instances the power can be single phase AC.

The VFG 104 includes an exciter 122 operatively connected to receive DC exciter current from the GCU 102, i.e. from the exciter driver 120. The exciter 122 is configured to output AC power. The exciter 122 can be a wound field synchronous machine, e.g. including a three phase rotating armature and a stationary field winding. The exciter 122 can be a brushless exciter. The input to the exciter 122 is DC and the output of the exciter 122 is AC.

The VFG 104 includes a rotating rectifier 124 operatively connected to receive the AC power from the exciter 122. The rotating rectifier 124 is configured to output DC power to the main machine 126 of the VFG 104. The rotating rectifier 124 converts the AC power from the exciter 122 to DC. The DC output is applied to the main field rotor of the main machine 126.

The main machine 126 is configured to output AC power to the generator load 128. The main machine 126 can be a wound field synchronous machine, where the rotor is a wound field and the stator is a three phase armature. The main machine 126 produces the output power for the VFG 104, where the load 128 is connected to the outputs of the VFG 104. The main machine voltage and current are controlled by the field current input from the exciter driver 120.

For aircraft system the load 128 is a constant voltage load. The GCU 102 can sense the voltage at the point of regulation and adjust excitation such that the voltage is constant. In the event of a fault or failure of a load 128, the GCU 102 has the ability to adjust the excitation in order to clear the fault or to shut the system down completely so that the failure does not propagate.

A method includes supplying AC power from a first PMG 112 of a VFG 104 to a first rectifier 106 of a GCU 102 that is operatively connected to control the VFG 104. The method includes supplying AC power from a second PMG 114 to a second rectifier 108 of the GCU 102. The first PMG 112 supplies a lower AC voltage to the first rectifier 106 than the second PMG 114 supplies to the second rectifier 108.

The method includes powering an exciter drive 120 of the GCU with DC power from the second rectifier 108. The method includes powering an exciter 122 of the VFG with DC power from the exciter drive 120. It is contemplated that the method can include powering a controller 118 of the GCU 102 with DC power derived directly from the first rectifier 106 with or without an intervening power converter to step the voltage down. The method can also include using the exciter 122, e.g. including using the rotating rectifier 124, to drive a main machine 126 of the VFG 104 to power a generator load 128.

The methods and architecture disclosed herein allow for PMG 112 to provide power for the power supply of the controller 118, and allow for PMG 114 to provide power for the Exciter drive 120. Separate PMGs 112, 114 can be achieved by placing two PMG assemblies in the generator (VFG 104) or by using a single PMG assembly and splitting the winding such that there are two three phase windings in the PMG assembly (a low voltage low power winding for the first rectifier 106 and power supply and a higher power winding for first rectifier 106 and the DC to DC converter).

Potential benefits of systems and methods as disclosed herein include significant cost reduction by eliminating the need for a high voltage power supply in the GCU. There is also a potential benefit of elimination of transient suppressing components to address generator fault conditions.

The methods and systems of the present disclosure, as described above and shown in the drawings, provide for decoupling power for the controller of a generator control unit (GCU) from power for the exciter drive, while also resolving the discrepancy between excitation requirements and power supply requirements for the controller. While the apparatus and methods of the subject disclosure have been shown and described with reference to preferred embodiments, those skilled in the art will readily appreciate that changes and/or modifications may be made thereto without departing from the scope of the subject disclosure. from the exciter drive 120. It is contemplated that the method can include powering a controller 118 of the GCU 102 with DC power derived directly from the first rectifier 106 with or without an intervening power converter to step the voltage down. The method can also include using the exciter 122, e.g. including using the rotating rectifier 124, to drive a main machine 126 of the VFG 104 to power a generator load 128.

The methods and architecture disclosed herein allow for PMG 112 to provide power for the power supply of the controller 118, and allow for PMG 114 to provide power for the Exciter drive 120. Separate PMGs 112, 114 can be achieved by placing two PMG assemblies in the generator (VFG 104) or by using a single PMG assembly and splitting the winding such that there are two three phase windings in the PMG assembly (a low voltage low power winding for the first rectifier 106 and power supply and a higher power winding for first rectifite 106 and the DC to DC converter).

Potential benefits of systems and methods as disclosed herein include significant cost reduction by eliminating the need for a high voltage power supply in the GCU. There is also a potential benefit of elimination of transient suppressing components to address generator fault conditions.

The methods and systems of the present disclosure, as described above and shown in the drawings, provide for decoupling power for the controller of a generator control unit (GCU) from power for the exciter drive, while also resolving the discrepancy between excitation requirements and power supply requirements for the controller. While the apparatus and methods of the subject disclosure have been shown and described with reference to preferred embodiments, those skilled in the art will readily appreciate that changes and/or modifications may be made thereto without departing from the scope of protection as defined in the appended claims.

## Claims

1. A system comprising:
a variable frequency generator, VFG, and
a generator control unit, GCU, (102) including:
a first rectifier (106); and
a second rectifier (108), wherein each of the first rectifier (106) and the second rectifier (108) has a separate input configured to receive AC power from a separate respective permanent magnet generator; PMG;
**characterized in that** the GCU (102) further comprises a controller and an exciter drive operatively connected to receive a control signal from the controller, wherein the exciter drive is configured to output DC exciter current to the VFG, and wherein the exciter drive is operatively connected to receive DC power from the second rectifier (108), and
wherein the GCU (102) further comprises a low voltage power supply, LVPS, operatively connected to receive DC power from the first rectifier (106), and wherein the controller is operatively connected to receive DC power from the LVPS.

2. The system as recited in claim 1 wherein the LVPS is configured to convert the DC power received from the first rectifier (106) to a lower voltage for output.

3. The system as recited in claim 1, wherein the first rectifier (106) and the LVPS are connected together without an intervening High Voltage Power Supply stepping down voltage between the first rectifier (106) and the LVPS.

4. The system as recited in claim 1, wherein the controller is configured to output the control signal for excitation of the VFG.

5. The system as recited in any preceding claim, wherein the first and second rectifiers (106, 108) are configured such that the first rectifier (106) receives a lower input AC voltage than the second rectifier (108) and such that the first rectifier (106) outputs a lower DC voltage than the second rectifier (108).

6. The system as recited in any preceding claim, the wherein the VFG includes:
a first PMG, operatively connected to provide AC power to the first rectifier (106); and
a second PMG operatively connected to provide AC power to the second rectifier (108).

7. The system as recited in claim 6, wherein the VFG further comprises an exciter operatively connected to receive the DC exciter current from the GCU, wherein the exciter is configured to output AC power.

8. The system as recited in claim 7, wherein the VFG further comprises a rotating rectifier operatively connected to receive the AC power from the exciter, wherein the rotating rectifier is configured to output DC power.

9. The system as recited in claim 8, wherein the VFG further comprises a main machine operatively connected to receive the DC power from the rotating rectifier, wherein the main machine is configured to output AC power to a generator load.

10. A method comprising:
supplying AC power from a first permanent magnet generator, PMG, of a variable frequency generator, VFG, to a first rectifier (106) of a generator control unit, GCU, that is operatively connected to control the VFG; and
supplying AC power from a second PMG to a second rectifier (108) of the GCU, wherein the first PMG supplies a lower AC voltage to the first rectifier (106) than the second PMG supplies to the second rectifier (108), and **characterized by** further comprising:
powering an exciter drive of the GCU (102) with DC power from the second rectifier (108), wherein the exciter drive is operatively connected to receive a control signal from a controller (118) of the GCU (102), and
powering an exciter of the VFG with DC power from the exciter drive,
wherein the GCU (102) comprises a low voltage power supply, LVPS, operatively connected to receive DC power from the first rectifier (106), and wherein the controller (118) of the GCU (102) is operatively connected to receive DC power from the LVPS.

11. The method as recited in claim 10, further comprising powering the controller with the DC power from the first rectifier (106).

12. The method as recited in claim 10, further comprising using the exciter to drive a main machine of the VFG to power a generator load.

## Patentansprüche

1. System, umfassend:
einen Generator mit variabler Frequenz, VFG, und
eine Generatorsteuereinheit, GCU, (102), beinhaltend:
einen ersten Gleichrichter (106); und
einen zweiten Gleichrichter (108), wobei jeder von dem ersten Gleichrichter (106) und dem zweiten Gleichrichter (108) einen separaten Eingang aufweist, der konfiguriert ist, Wechselstromleistung von einem separaten jeweiligen Permanentmagnetgenerator, PMG, zu empfangen;
**dadurch gekennzeichnet, dass** die GCU (102) ferner eine Steuerung und einen Erregertreiber umfasst, der wirkverbunden ist, um ein Steuersignal von der Steuerung zu empfangen, wobei der Erregertreiber konfiguriert ist, Gleichstrom-Erregerstrom an den VFG auszugeben, und wobei der Erregertreiber wirkverbunden ist, um Gleichstromleistung von dem zweiten Gleichrichter (108) zu empfangen, und
wobei die GCU (102) ferner eine Niederspannungsstromversorgung, LVPS, umfasst, die wirkverbunden ist, um Gleichstromleistung von dem ersten Gleichrichter (106) zu empfangen, und wobei die Steuerung wirkverbunden ist, um Gleichstromleistung von der LVPS zu empfangen.

2. System nach Anspruch 1, wobei die LVPS konfiguriert ist, die von dem ersten Gleichrichter (106) empfangene Gleichstromleistung in eine niedrigere Spannung zum Ausgang umzuwandeln.

3. System nach Anspruch 1, wobei der erste Gleichrichter (106) und die LVPS ohne eine dazwischenliegende Hochspannungsstromversorgung, die die Spannung zwischen dem ersten Gleichrichter (106) und der LVPS heruntersetzt, miteinander verbunden sind.

4. System nach Anspruch 1, wobei die Steuerung konfiguriert ist, das Steuersignal zur Erregung des VFG auszugeben.

5. System nach einem der vorangehenden Ansprüche, wobei der erste und der zweite Gleichrichter (106, 108) derart konfiguriert sind, dass der erste Gleichrichter (106) eine niedrigere Eingangs-Wechselspannung als der zweite Gleichrichter (108) empfängt und dass der erste Gleichrichter (106) eine niedrigere Gleichspannung als der zweite Gleichrichter (108) ausgibt.

6. System nach einem der vorangehenden Ansprüche, wobei der VFG beinhaltet:
einen ersten PMG, der wirkverbunden ist, um Wechselstromleistung an den ersten Gleichrichter (106) bereitzustellen; und
einen zweiten PMG, der wirkverbunden ist, um Wechselstromleistung an den zweiten Gleichrichter (108) bereitzustellen.

7. System nach Anspruch 6, wobei der VFG ferner einen Erreger umfasst, der wirkverbunden ist, um den Gleichstrom-Erregerstrom von der GCU zu empfangen, wobei der Erreger konfiguriert ist, Wechselstromleistung auszugeben.

8. System nach Anspruch 7, wobei der VFG ferner einen rotierenden Gleichrichter umfasst, der wirkverbunden ist, um die Wechselstromleistung von dem Erreger zu empfangen, wobei der rotierende Gleichrichter konfiguriert ist, Gleichstromleistung auszugeben.

9. System nach Anspruch 8, wobei der VFG ferner eine Hauptmaschine umfasst, die wirkverbunden ist, um die Gleichstromleistung von dem rotierenden Gleichrichter zu empfangen, wobei die Hauptmaschine konfiguriert ist, Wechselstromleistung an eine Generatorlast auszugeben.

10. Verfahren, umfassend:
Zuführen von Wechselstromleistung von einem ersten Permanentmagnetgenerator, PMG, eines Generators mit variabler Frequenz, VFG, an einen ersten Gleichrichter (106) einer Generatorsteuereinheit, GCU, die wirkverbunden ist, um den VFG zu steuern; und
Zuführen von Wechselstromleistung von einem zweiten PMG an einen zweiten Gleichrichter (108) der GCU, wobei der erste PMG eine niedrigere Wechselspannung an den ersten Gleichrichter (106) zuführt als der zweite PMG an den zweiten Gleichrichter (108) zuführt, und **dadurch gekennzeichnet, dass** es ferner umfasst:
Versorgen eines Erregertreibers der GCU (102) mit Gleichstromleistung von dem zweiten Gleichrichter (108), wobei der Erregertreiber wirkverbunden ist, um ein Steuersignal von einer Steuerung (118) der GCU (102) zu empfangen, und
Versorgen eines Erregers des VFG mit Gleichstromleistung von dem Erregertreiber,
wobei die GCU (102) eine Niederspannungsstromversorgung, LVPS, umfasst, die wirkverbunden ist, um Gleichstromleistung von dem ersten Gleichrichter (106) zu empfangen, und wobei die Steuerung (118) der GCU (102) wirkverbunden ist, um Gleichstromleistung von der LVPS zu empfangen.

11. Verfahren nach Anspruch 10, ferner umfassend Versorgen der Steuerung mit der Gleichstromleistung von dem ersten Gleichrichter (106).

12. Verfahren nach Anspruch 10, ferner umfassend Verwenden des Erregers zum Antreiben einer Hauptmaschine des VFG, um eine Generatorlast zu versorgen.

## Revendications

1. Système comprenant :
un générateur à fréquence variable, VFG, et
une unité de commande de générateur, GCU (102), comportant :
un premier redresseur (106) ; et
un second redresseur (108), dans lequel chacun du premier redresseur (106) et du second redresseur (108) possède une entrée séparée configurée pour recevoir une énergie CA provenant d'un générateur à aimant permanent respectif séparé ; PMG ;
**caractérisé en ce que** la GCU (102) comprend en outre un contrôleur et un entraînement d'excitateur connectés fonctionnellement pour recevoir un signal de contrôle du contrôleur, dans lequel l'entraînement d'excitateur est configuré pour fournir un courant d'excitateur CC au VFG, et dans lequel l'entraînement d'excitateur est connecté fonctionnellement pour recevoir une énergie CC du second redresseur (108), et
dans lequel la GCU (102) comprend en outre une alimentation en énergie basse tension, LVPS, connectée fonctionnellement pour recevoir l'énergie CC du premier redresseur (106), et dans lequel le contrôleur est connecté fonctionnellement pour recevoir l'énergie CC de la LVPS.

2. Système selon la revendication 1, dans lequel la LVPS est configurée pour convertir l'énergie CC reçue du premier redresseur (106) en une tension inférieure pour la sortie.

3. Système selon la revendication 1, dans lequel le premier redresseur (106) et la LVPS sont connectés ensemble sans alimentation en énergie haute tension intermédiaire abaissant la tension entre le premier redresseur (106) et la LVPS.

4. Système selon la revendication 1, dans lequel le contrôleur est configuré pour délivrer en sortie le signal de contrôle pour l'excitation du VFG.

5. Système selon une quelconque revendication précédente, dans lequel les premier et second redresseurs (106, 108) sont configurés de telle sorte que le premier redresseur (106) reçoit une tension CA d'entrée inférieure à celle du second redresseur (108) et de telle sorte que le premier redresseur (106) délivre en sortie une tension CC inférieure à celle du second redresseur (108).

6. Système selon une quelconque revendication précédente, dans lequel le VFG comporte :
un premier PMG, connecté fonctionnellement pour fournir de l'énergie CA au premier redresseur (106) ; et
un second PMG connecté fonctionnellement pour fournir une énergie CA au second redresseur (108).

7. Système selon la revendication 6, dans lequel le VFG comprend en outre un excitateur connecté fonctionnellement pour recevoir le courant d'excitateur CC de la GCU, dans lequel l'excitateur est configuré pour délivrer en sortie une énergie CA.

8. Système selon la revendication 7, dans lequel le VFG comprend en outre un redresseur rotatif connecté fonctionnellement pour recevoir l'énergie CA de l'excitateur, dans lequel le redresseur rotatif est configuré pour délivrer en sortie une énergie CC.

9. Système selon la revendication 8, dans lequel le VFG comprend en outre une machine principale connectée fonctionnellement pour recevoir l'énergie CC du redresseur rotatif, dans lequel la machine principale est configurée pour délivrer en sortie une énergie CA à une charge de générateur.

10. Procédé comprenant :
l'alimentation en énergie CA à partir d'un premier générateur à aimant permanent ,PMG, d'un générateur à fréquence variable ,VFG, d'un premier redresseur (106) d'une unité de commande de générateur, GCU, qui est connectée fonctionnellement pour commander le VFG ; et
l'alimentation en énergie CA à partir d'un second PMG d'un second redresseur (108) de la GCU, dans lequel le premier PMG alimente une tension CA inférieure au premier redresseur (106) que celle alimentée par le second PMG au second redresseur (108), et **caractérisé en ce qu'**il comprend en outre :
la fourniture d'énergie à un entraînement d'excitateur de la GCU (102) avec une énergie CC à partir du second redresseur (108), dans lequel l'entraînement d'excitateur est connecté fonctionnellement pour recevoir un signal de contrôle d'un contrôleur (118) de la GCU (102), et
la fourniture d'énergie à un excitateur du VFG avec de l'énergie CC à partir de l'entraînement d'excitateur,
dans lequel la GCU (102) comprend une alimentation en énergie basse tension, LVPS, connectée fonctionnellement pour recevoir l'énergie CC du premier redresseur (106), et dans lequel le contrôleur (118) de la GCU (102) est connecté fonctionnellement pour recevoir l'énergie CC de la LVPS.

11. Procédé selon la revendication 10, comprenant en outre la fourniture d'énergie au contrôleur avec l'énergie CC à partir du premier redresseur (106).

12. Procédé selon la revendication 10, comprenant en outre l'utilisation de l'excitateur pour entraîner une machine principale du VFG afin de fournir de l'énergie à une charge de générateur.
